# EUROPEAN PATENT SPECIFICATION

(11) **EP 3 581 146 B1**
(45) Date of publication and mention of the grant of the patent: **26.01.2022**
(21) Application number: 18305715.7
(22) Date of filing: 12.06.2018
(51) Int. Cl.: A61C 7/14, A61C 7/28

(54) **PEARL FOR ORTHODONTIC TREATMENT**
PERLE ZUR KIEFERORTHOPÄDISCHEN BEHANDLUNG
PERLE POUR TRAITEMENT ORTHODONTIQUE

(43) Date of publication of application: 18.12.2019
(73) Proprietor: 3C, 93150 Blanc Mesnil (FR)
(72) Inventor: CURIEL, Bruno, 43583 Raanana (IL); COUDRIN, Benjamin, 31490 Leguevin (FR); ERNENWEIN, Didier, 92420 Vaucresson (FR); HARVENT, Jacques, 94170 Le Perreux sur Marne (FR)
(74) Representative: Plasseraud IP

(56) References cited:
- EP-A1- 3 308 737
- DE-U1- 20 009 331
- KR-B1- 101 461 317
- US-A- 5 931 667
- US-A1- 2009 325 120
- US-A1- 2011 086 322
- US-A1- 2018 014 916

## Description

### FIELD OF THE DISCLOSURE

The disclosure relates to a pearl for an orthodontic treatment and a method to manufacturing such a pearl.

More precisely, the disclosure relates to a pearl to be placed on a tooth for an orthodontic treatment, the pearl having a surface, the surface consisting of a first surface and a second surface, the first surface being destined to be in contact with a tooth and the second surface being opposite to the first surface.

### BACKGROUND OF THE DISCLOSURE

Generally, as disclosed in document US 8678817 B2, a bracket includes a mounting base for attachment to a tooth surface and an archwire slot formed upon the base and sized for receiving an orthodontic archwire. The bracket is provided with tie wings that hold the archwire by means of a wire ligature or elastic ligature.

Other brackets are also used for the same purpose but with no ligature tie. These brackets are qualified of self-ligating braces.

But such a bracket is easily visible, making the bracket unaesthetic. Furthermore, and especially when the pearl is placed on the lingual surface of a tooth, the bracket as already known could cause a discomfort, when, for example, the tongue touches the bracket.

Documents US 5 931 667 A and KR 101 461 317 B1 both disclose a pearl shaped bracket to be placed on a tooth for an orthodontic treatment, the pearl having a first surface to be in contact with a tooth and, opposit the first surface, a smooth second surface, an arch wire hollow channel extending longitudinally between two openings on the second surface.

### SUMMARY OF THE DISCLOSURE

The present invention relates to a pearl to be placed on a tooth for an orthodontic treatment, the pearl having a surface, the surface comprising a first surface and a second surface, the first surface being destined to be in contact with a tooth and the second surface being opposite to the first surface,wherein the second surface is smooth and wherein the second surface comprises a first opening and a second opening and the pearl further has a passage for an archwire, the passage extending through the first opening and the second opening of the second surface and longitudinally between the first and the second openings along a longitudinal direction wherein the pearl comprises material and gaps in a honeycomb type structure in between the surface and the passage in such a way that the arrangement of matter improves the rigidity of the pearl.

Such a pearl allows notably being blended with the tooth. More precisely, with a pearl defined in the disclosure, the patient does not feel (or barely) it in his/her mouth. Besides, such a pearl is very aesthetic since it is little or no visible.

In various embodiments of the disclosure, one and/or the other of the following features may be incorporated in the pearl of the invention, alone or in mutual combination:
the pearl is coated;
the external surface of the pearl comprises a smooth material;
the external surface of the first surface comprises a smooth material;
the external surface of the a second surface comprises a smooth material;
the pearl further comprises a third surface, the third surface separates the second surface in two portions, and the third surface comprises a groove;
the external surface of the a third surface comprises a smooth material;
a pearl to be placed on a tooth for an orthodontic treatment, the pearl having a surface, the surface consisting in a first surface, a second surface and a third surface,, the first surface being destined to be in contact with a tooth and the second surface being opposite to the first surface, wherein the second surface does not comprise any sharp corner, the third surface separates the second surface in two portions, and wherein the third surface comprises a groove;
the material of the passage comprises metal;
the passage is in metal;
the passage extending longitudinally between the first and the second openings along a longitudinal direction has a square or rectangular cross-section shape;
the pearl comprises two passages;
the pearl further comprises a housing provided for receiving a free end of an archwire;
the first surface has a pearl area which is in contact with a tooth area on a tooth, the pearl area and the tooth area being complementary;
the second surface further comprises an apex, wherein the apex is smooth;
the first surface has a maximum vertical dimension of 4 mm and a maximum horizontal dimension of 3 mm and wherein the apex is at a maximal distance of the first surface of 3 mm;
the pearl has a volume comprised between 3 mm³ (cubic millimetre) and 11 mm³, the volume being delimited by the surface;
the pearl has a weight comprised between 1 g (gram) and 10 g.

Another object of the invention is a method of manufacturing a pearl to be placed on a tooth for an orthodontic treatment, the pearl comprising a surface, the surface consisting of a first surface and a second surface, the first surface being destined to be in contact with a tooth and the second surface being opposite to the first surface, the second surface being smooth, wherein the second surface comprises a first opening and a second opening the pearl further has a passage for an archwire, the passage extends through the first opening and the second opening of the second surface and longitudinally between the first and the second openings along a longitudinal direction wherein the pearl is obtained by additive manufacturing wherein the pearl comprises material and gaps in a honeycomb type structure in between the surface and the passage in such a way that the arrangement of matter improves the rigidity of the pearl.

In various embodiments of the disclosure, one and/or the other of the following features may be incorporated in the method of manufacturing of the disclosure, alone or in mutual combination:
the additive manufacturing is made with a ceramic material;
the additive material is made with a biocompatible material.

### BRIEF DESCRIPTION OF THE DRAWINGS

Other characteristics and advantages of the disclosure will readily appear from the following description of examples, provided as non-limitative examples, in reference to the accompanying drawings.
Figure 1 is an overview of several pearls for an orthodontic treatment.
Figure 2 is a perspective view of a pearl according to the disclosure, the pearl being placed on a tooth.
Figure 3 is a front view of an example of the pearl according to the disclosure.
Figure 4 a perspective side view of the pearl of figure 3.
Figure 5 a cross-section side view of the pearl of figure 3.
Figures 6 and 7 are a front view of another example of the pearl according to the disclosure.
Figure 8 is a front view of another example of the pearl according to the disclosure.
Figures 9, 10 and 11 are perspective views of another example of the pearl according to the disclosure.

### DETAILLED DESCRIPTION OF THE DRAWINGS

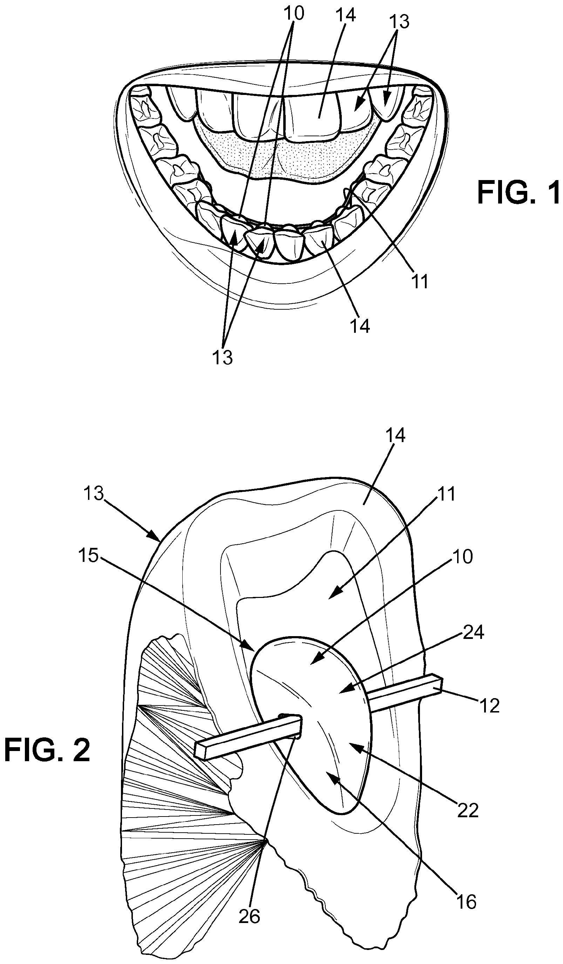

The figures illustrate different examples of a pearl 10 according to the disclosure. The pearl 10 is used for an orthodontic treatment. For example, as illustrated in figures 1 and 2, the pearl 10 is affixed on a tooth 14. In this case, the pearl 10 is affixed on the lingual surface 11 of the tooth 14. However, in another example, the pearl 10 may be affixed on the labial 13 surface of the tooth 14.

More precisely, the pearl 10 is a holding element for an archwire 12. More precisely, the pearl 10 has the function of a bracket for the archwire 12. The pearl 10 holds the archwire 12 within it, this avoids the archwire 12 to release from the pearl 10. In general, an orthodontic arch is formed when an archwire 12 is inserted in a series of pearls 10 mounted on several teeth of the same jaw. When the pearls 10 are affixed on the lingual surface 11 of the teeth, the orthodontic arch is a lingual orthodontic arch. When the pearls 10 are affixed on the labial surface 13 of the teeth, the orthodontic arch is a labial orthodontic arch.

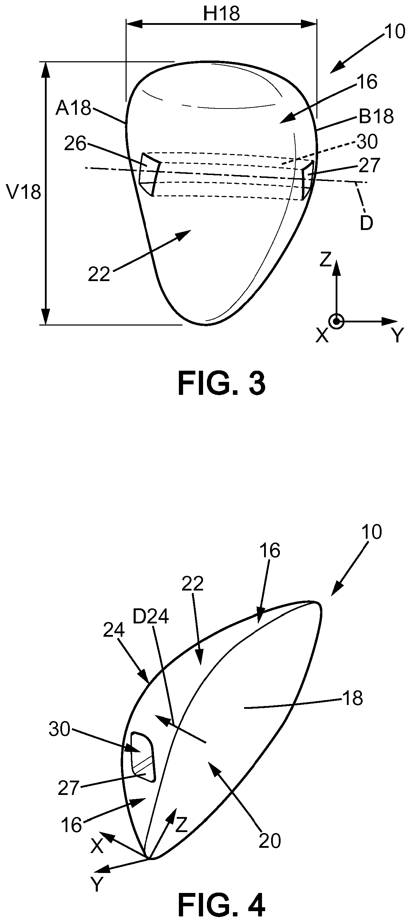

Referring now to figures 3 and 4, the pearl 10 has a surface 16. The surface 16 consists of a first surface 18 and a second surface 22.

The first surface 18 and the second surface 22 delimit the volume of the pearl 10. Advantageously, the volume of the pearl is comprised between 2 mm³ (cubic millimetre) and 25 mm³. Preferably, the volume is comprised between 3 mm³ and 11 mm³. The pearl 10 has thus a particular compact size relative to a tooth. For example, for a tooth, the pearl 10 occupies between 20% and 99% of the lingual surface of the tooth. The pearl 10 may have a shape that is anatomic and/or isomorphic with the teeth. In other words, for a tooth 14 that is wider on its top free end than on its base, the shape of the pearl 10 can also be wider toward the top free end of the tooth 14 than toward the base of the tooth.

In addition, the pearl weights preferably between 1 g (gram) and 10 g.

The pearl 10 is for example made of ceramic material. Ceramic has a similar colour to the one of a tooth, which improves the aesthetic property of the pearl 10. In addition, ceramic is biocompatible, which means that it is compatible with an utilization for a human body. Ceramic is also a material resistant to load, which provide a good bearing of the pearl 10 regarding the load applied by the archwire 12 on the pearl 10. However, the pearl 10 may be made of other materials such as biocompatible resins.

Manufacture in one piece makes it possible to do away with any assembly problems associated with manual handling. Such pearl 10 is especially manufactured in one piece when it is made of plastic material, for instance biocompatible resins.

Besides, it may be manufactured in at least two parts assembled together by attaching means, like snap-fitting for instance. Such a manufacture in two parts allows an optimization of the quantity of material used and allows thus a reduction of the costs. The manufacture in at least two parts may be particularly applied when the pearl 10 comprises other material such as ceramic. Actually, the ceramic materials are generally more expensive than the plastic ones. In addition the materials used in orthodontic treatment (plastic and ceramic) need to be biocompatible. Besides, the manufacture in at least two parts may be applied for technical / economic reasons.

Besides, the pearl can be coated. More precisely, the external surface of the pearl 10 can be coated. In fact, the pearl 10 could be manufactured in metal for technical or economic reasons and coated with a smooth material at its surface to increase the patient's comfort. Likewise, the pearl 10 can be made of a smooth material.

A smooth material is for instance a ceramic material or a plastic material.

The first surface 18 is destined to be in contact with the tooth 14. The first surface 18 has a pearl area 20. The pearl area 20 is the area which is destined to be in contact with the tooth 14, on a tooth area 15. Advantageously, the pearl area 20 and the tooth area 15 are complementary. In other words, the shape of the pearl area 20 and the shape of the tooth area 15 are in a complementary form. In that way, the entirety of the pearl area 20 is in contact with the entirety of the tooth area 15. When the pearl is coated, it means that at least the external surface of the second surface 22 is coated. When the pearl is coated, the external surface of the first surface 18 may additionally be coated.

The second surface 22 is opposite to the first surface 18. The second surface 22 is destined to be in contact with the surrounding environment of the inside of a mouth. A tongue can therefore touch the second surface 22. In addition, the second surface 22 is destined to be crossed by the archwire 12.

The second surface 22 does not comprise any sharp corner. In other words, there is no surface irregularity or roughness on the second surface 22. The second surface 22 is therefore smooth. The second surface 22 is thus shaped in such a way that it completes the external aspect of a tooth 14.

In addition, for example, the second surface 22 has a domed shape. Preferably, the angles between the tangents of the second surface 22 are comprised between and 120° and 180°.

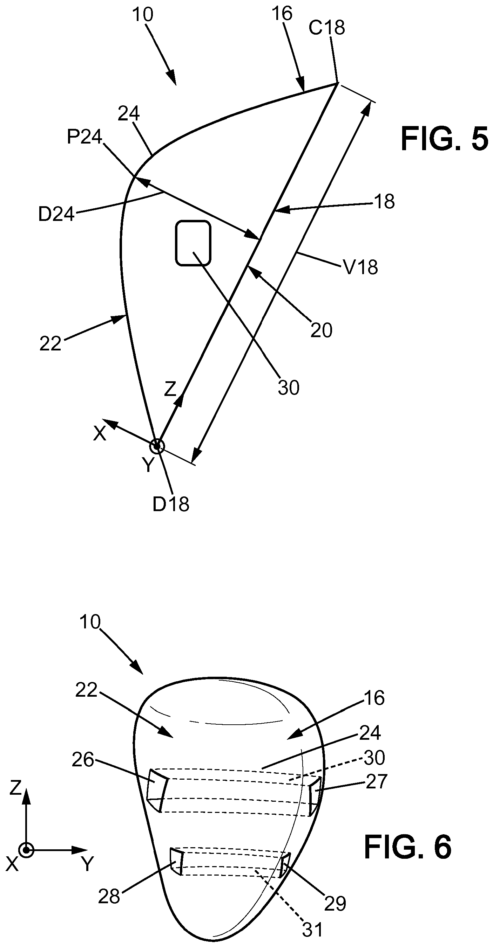

As depicted in figure 5 for example, the second surface 22 is convex. The convexity of the second surface 22 may be more or less pronounced. Indeed, in case the tooth 14 comprises a hole at the location where the pearl 10 is destined to be placed, the convexity of the second surface 22 is low (i.e. the second surface 22 is only few curved). In this case, the pearl 10 closes the hole. As a result, the shape of the first surface 18 is more convex than the shape of the second surface 22. In addition, the second surface 22 is in continuity with the surface of the tooth 14.

More precisely, mathematically speaking, the second surface 22 can be represented as a smooth function. The smooth function has its curves and at least its first derivate continuous. For example, the function which represents the second surface 22 may be of class C¹ if only first derivates are continuous. In another example, the function may be of class C², and its first and second derivates are continuous. In another example, the function may be of class C³, and its first, second and third derivates are continuous. In other words, the function may be of class Cⁿ, and its n derivates are continuous, n being a positive integer.

This particular shape of the second surface 22 provides an aesthetic result of the pearl 10. In addition, when a person runs his/her tongue over his/her tooth, he/she does not have the feeling the tooth comprises a foreign element on its surface. Due to the shape of the second surface 22, the tongue does not hook on the pearl 10, or is not skinned when running over the pearl 10.

Besides, the second surface 22 can comprise an apex 24. The apex 24 is not sharp. In fact, the apex 24 is convex. The radius of curvature of the apex 24 is chosen in order to give as much as possible the feeling of touching the tooth 14 (and therefore the feeling of absence of the pearl 10). For example, when the pearl 10 is placed on a tooth where the tooth or the pearl 10 is capable of being in contact with a tooth of the opposite jaw, the radius of curvature of the apex 24 should be selected in order to avoid a contact between the pearl 10 and the tooth of the opposite jaw.

In addition, the apex 24 can be located relative to a passage 30 that will be discussed below.

Furthermore, as illustrated for example in figure 3, the second surface 22 comprises a first opening 26 and a second opening 27. The first opening 26 and the second opening 27 delimit a passage 30. The first opening 26 and the second opening 27 are arranged approximately on both sides of the apex 24.

The passage 30 defines a hollow channel for the archwire 12. The passage 30 extends longitudinally along a longitudinal direction D through the first opening 26 and the second opening 27, within the pearl 10. The first and second openings 26, 27 are located along the longitudinal direction D, opposite with regard to the apex 24. The shape of the passage 30 is provided so as to receive the archwire 12. More precisely, according to the disclosure, the passage 30 is dedicated to the archwire 12. In other words, the cross-section shape of the passage 30 corresponds to the cross-section shape of the archwire 12. However, there is a play between the archwire 12 and the passage 30. The play corresponds to the difference between the cross-section size of the passage 30 and the cross-section size of the archwire 12. More precisely, the cross-section size of the passage 30 is taller than or equal to the cross-section size of the archwire 12. The play, and therefore the cross-section size of the passage 30 and/or the cross-section size of the archwire 12 is chosen in order to allow more or less the archwire 12 to move transversely within the passage 30. The best fit between the passage 30 and the archwire 12 is thus chosen for this purpose. The higher the play is, the more the archwire 12 will move within the passage 30. For example, if the cross-section size of the passage 30 almost corresponds to the cross-section size of the archwire 12, the archwire 12 can barely move transversely within the passage 30. In this way, the more the friction between the passage 30 and the archwire 12, and the more the movements of the tooth 14 are controlled (such as for example the torque movement). On the contrary, if the cross-section size of the passage 30 is higher than the cross-section size of the archwire 12, the archwire 12 can move transversely within the passage 30.

However, it should be noted that in most cases, a longitudinal movement (along the longitudinal direction D) of the archwire 12 within the passage 30 should be possible in order to allow a movement of the tooth 14 during the orthodontic treatment.

Besides, when the pearl 10 is made of a smooth material, the passage 30 can be in metal in order to facilitate the insertion of the archwire 12 and to reduce the friction between the archwire 12 and the passage 30.

As it can be seen in figure 5, the cross-section of the passage 30 can be square.

In another example, the cross-section of the passage 30 may be rectangular.

In another example, the cross-section of the passage 30 may be circular.

The cross-section of the passage 30 may also be triangular.

In another example, the cross-section of the passage 30 may be a mix of the shapes presented here above. For example, the passage 30 can have a cross-section with a square angle and the remainder rounded. In another example, the passage can have a cross-section with two square angles and the remainder rounded. A square section of the passage 30 is particularly adapted to a square archwire. Likewise, a rectangular section of the passage 30 is particularly adapted to rectangular archwire, and a circular section of the passage 30 is particularly adapted to circular archwire. However, it should be noted that it could be possible to use a rectangular or circular archwire with a square passage, a rectangular or square archwire with a circular passage, and so on.

In another example depicted in figure 6, the second surface 22 comprises, in addition to the first and second openings 26 and 27, a third and fourth openings 28 and 29.

The third opening 28 and the fourth opening 29 defines a supplementary passage 31. This supplementary passage 31 may be similar or different to the passage 30. For example, the supplementary passage 31 may have a circular cross-section shape while the passage 30 has a square cross-section shape;

The supplementary passage 31 defines a supplementary hollow channel for a supplementary archwire 12'. The supplementary archwire 12' may be identical or different to the archwire 12. For example, the archwire 12 is circular in its cross-section whereas the supplementary archwire 12' has a circular cross-section.

The supplementary passage 31 may improve the efficiency of the orthodontic treatment. Indeed, during an orthodontic treatment, teeth are intended to move, from a malocclusion position to an aligned position. Such movement is due to the force exerted by the archwire 12 on each tooth, via the pearl 10. The position of the archwire 12 within the pearl 10 determines the movement of the tooth 14. When the pearl 10 comprises a supplementary passage 31 and when the supplementary archwire 12' is inserted into the supplementary passage 31, the archwire 12 may for example control the alignment of the tooth 14, and the supplementary archwire 12' may control the orientation of the tooth 14 and therefore the torque movement of the tooth 14. In this case, the supplementary archwire 12' completes the orthodontic treatment. In addition, the supplementary archwire 12' improves the effectiveness of the orthodontic treatment. Advantageously, the presence of a supplementary archwire 12' allows more force to be applied against the tooth 14 and thus allows reducing the duration of the orthodontic treatment.

In another example, in a first step of the orthodontic treatment, the pearl 10 can be provided with both the archwire 12 and the supplementary archwire 12'. Then, in a further step, one of the archwire 12 and the supplementary archwire 12' can be removed of the passage 30 or the supplementary passage 31 respectively.

In another example, the passage 30 and the supplementary passage 31 may receive simultaneously the archwire 12.

Coming back to figure 5, the pearl 10 is entirely filled with its material between the surface 16 and the passage 30. The pearl 10 is therefore a solid body which comprises the passage 30.

In another example, which is not part of the claimed invention, the pearl 10 may comprise matter only at its surface 16 and at around of the passage 30, the material surrounding the passage 30. In other words, in this case, the pearl 10 is hollow, but the passage 30 is delimited by the material.

The pearl 10, according to the invention, comprises material and gaps in honeycomb type structure between the surface 16 and the passage 30 in such a way that the arrangement of matter improves the rigidity of the pearl 10

In yet another example, which is not part of the claimed invention, the pearl 10 may comprise matter only at its surface 16. In this case, the pearl 10 is hollow.

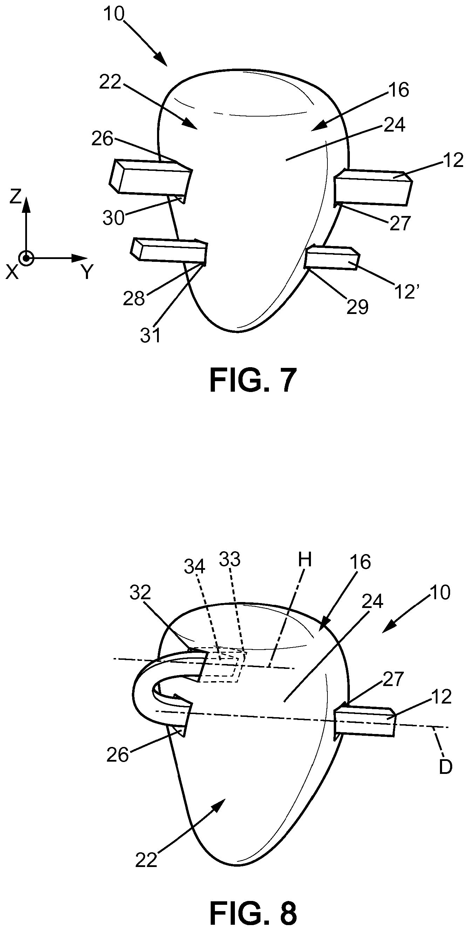

According to another example illustrated in figure 8, the second surface 22 comprises a housing opening 32. The housing opening 32 is provided for receiving a free end of the archwire 12. For example, the housing opening 32 can be provided on the pearl 10 placed on the last or first tooth of the orthodontic arch. The housing opening 32 allows to stow the free end of the archwire 12, and not to leave free the end of the archwire 12 within the mouth of the person subject to this orthodontic treatment.

In an example, when the pearl 10 is entirely filled with its material, whereas this construction is not part of the claimed invention, the material delimits a housing 34 which extends from the housing opening 32 within the pearl. More precisely, along a longitudinal direction H, the housing 34 extends from the housing opening 32 to a bottom 33. The housing 34 has therefore a depth delimited by the bottom 33. The housing 34 has a shape which is complementary to the shape of the archwire 12 received within the housing 34. In addition, the housing 34 is provided so that the archwire 12 can move along the longitudinal direction H during the orthodontic treatment. The movement of the archwire 12 within the housing 34 is, for example, due to the movement of the teeth from the malocclusion position to the aligned position: the more the teeth tend towards the aligned position, the more the archwire 12 approaches the bottom 33. In fact, the depth of the housing 34 is chosen so that the archwire 12 does not abut against the bottom 33 of the housing 34. The bottom 33 of the housing 34 thus does not interfere with the orthodontic treatment.

The dimensions of the pearl 10 depend on several factors. For example, the factors can be one or a combination of the following:
- the external shape of the tooth 14,
- the dimensions of the tooth 14,
- the location of the tooth 14 on the jaw,
- the malocclusion position of the tooth 14,
- the aligned position of the tooth 14,
- the dimension of the archwire 12 provided for being inserted within the pearl 10,
- the contacts between the tooth 14 and the teeth from the opposite jaw,
- the contacts between the tooth 14 and the teeth from the same jaw,
- the comfort of the patient,
- minimising the bends of the archwire 12,
- treatment needs.

All these factors contribute to the effectiveness of the treatment and the comfort felt by the person who has such a pearl 10 affixed on a tooth 14.

Figures 4 and 5 illustrate an example of the dimensions that can have a pearl 10. The pearl 10 extends along a first direction Y, a second direction X and a third direction Z. the first direction Y, the second direction X and the third direction Z are perpendicular to each other. The first direction Y represents the horizontal direction. The second direction X represents the transversal direction. The third direction Z represents the vertical direction.

Along the first direction Y, the first surface 18 has a horizontal dimension H18, taken between its two most distant points A18 and B18, which is inferior to 5 mm (milimeter). For example, the horizontal dimension is 2,5 mm.

Advantageously, the horizontal dimension H18 can be chosen in order to comprise the largest possible length of archwire 12. The contact of the tongue with the archwire 12 is reduced. In other words, the pearl 10 protects the tongue of any discomfort when touching the archwire 12.

Along the third direction Z, the first surface 18 has a vertical dimension V18, taken between its two most distant points C18 and D18, which is inferior to 5 mm. For example, the vertical dimension is 4 mm.

Along the transversal direction X, the apex 24 is a distance D24, taken between the peak P24 of the apex 24 the first surface 18 which is comprised between 1 mm and 4 mm. For example, the distance D24 is comprised between 2 mm and 3 mm.

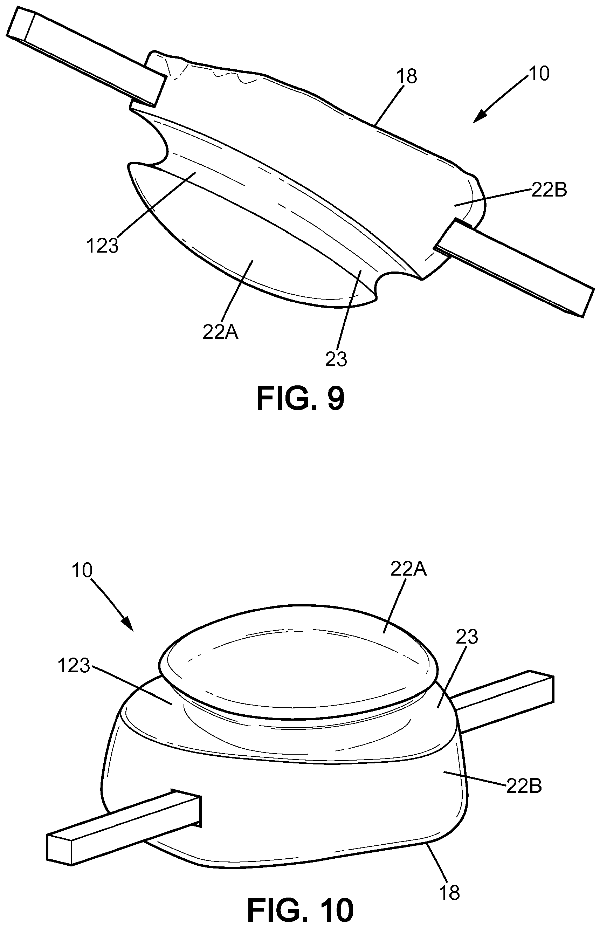

Another example of the disclosure is now described in reference with figures 9, 10 and 11.

The surface 16 of the pearl 10 of figure 9 comprises the first surface 18, the second surface 22 and a third surface 23. The third surface separates the second surface 22 in two portions 22A and 22B. In addition, the third surface 23 comprises a groove 123. When the pearl is coated, the external surface of the third surface 23 may additionally be coated.

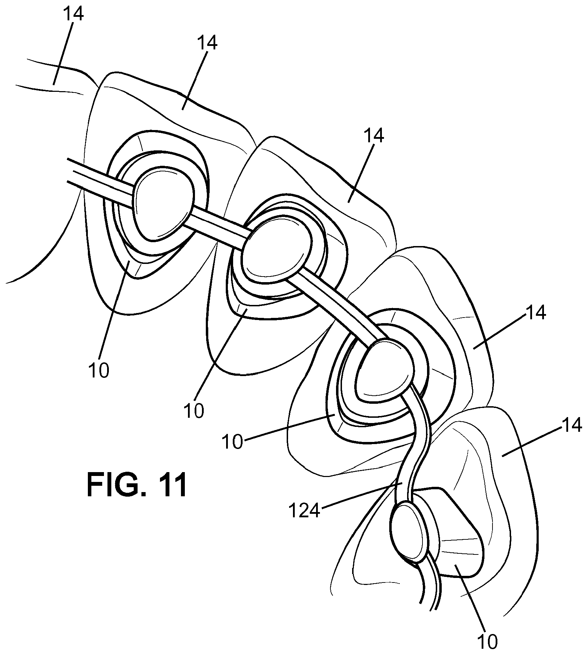

The groove 123 is circular. The groove 123 is provided in order to receive for example an orthodontic elastic power chain 124 as depicted in figure 11.

In figure 11, a series of pearls 10 are mounted on several teeth 14 of the same jaw. The orthodontic elastic power chain 124 is connected at all pearls 10, by being maintained in the groove 123 of each pearl 10.

Another object of the disclosure is a method of manufacturing the pearl 10.

According to the disclosure, the pearl 10 is manufactured by additive manufacturing. For example, the additive manufacturing is three-dimensional printing. Three-dimensional printing reduces costs and increases productive capacity.

Advantageously, the pearl 10 can be made of ceramic materials or biocompatible resin.

Prior to printing, the pearl 10 is designed by computer-aided design (CAD). The computer aided-design takes into account the malocclusion position and an aligned position of the tooth or teeth.

In another example, the pearl 10 is manufactured by subtractive manufacturing. For example, the subtractive manufacturing is done by cutting materials with a CNC (computer numerical control) milling machine or with a laser cutting machine.

In another example, the pearl 10 is made by casting metal or ceramic or PEEK from a mould.

## Claims

1. A pearl (10) to be placed on a tooth (14) for an orthodontic treatment, the pearl (10) having a surface (16), the surface (16) comprising a first surface (18) and a second surface (22), the first surface (18) being destined to be in contact with a tooth (14) and the second surface (22) being opposite to the first surface (18), wherein the second surface (22) is smooth, and wherein the second surface (22) comprises a first opening (26) and a second opening (27), and the pearl (10) further has a passage (30) for an archwire (12), the passage (30) extending through the first opening (26) and the second opening (27) of the second surface (22), and longitudinally between the first and the second openings (26, 27) along a longitudinal direction, wherein the pearl (10) comprises material and gaps in a honeycomb type structure in between the surface (16) and the passage (30) in such a way that the arrangement of matter improves the rigidity of the pearl.

2. The pearl (10) of claim 1, wherein the pearl (10) further comprises a third surface (23), the third surface separates the second surface (22) in two portions (22A, 22B), and the third surface (23) comprises a groove (123).

3. The pearl (10) of anyone of claims 1 or 2, wherein the pearl (10) is coated.

4. The pearl (10) of anyone of the preceding claims, wherein the material of the passage (30) comprises metal.

5. The pearl (10) of anyone of the preceding claims, wherein the pearl (10) comprises two passages (30, 31).

6. The pearl (10) of anyone of the preceding claims, wherein the pearl (10) further comprises a housing (34) provided for receiving a free end of an archwire (12).

7. The pearl (10) of anyone of the preceding claims, wherein the first surface (18) has a pearl area (20) which is in contact with a tooth area (15) on a tooth (14), the pearl area (20) and the tooth area (15) being complementary.

8. The pearl (10) of anyone of the preceding claims, the second surface (22) further comprises an apex (24), wherein the apex (24) is smooth.

9. The pearl (10) of the preceding claim, wherein the first surface (18) has a maximum vertical dimension (V18) of 4 mm and a maximum horizontal dimension (H18) of 3 mm and wherein the apex (24) is at a maximal distance (D24) of the first surface (18) of 3 mm.

10. The pearl (10) of anyone of the preceding claims, wherein the pearl (10) has a volume comprised between 3 mm³ and 11 mm³, the volume being delimited by the surface (16).

11. The pearl (10) of anyone of the preceding claims, wherein the pearl (10) has a weight comprised between 1 g and 10 g.

12. A method of manufacturing a pearl (10) to be placed on a tooth (14) for an orthodontic treatment, the pearl (10) comprising a surface (16), the surface (16) consisting of a first surface (18) and a second surface (22), the first surface (18) being destined to be in contact with a tooth (14) and the second surface (22) being opposite to the first surface (18), the second surface (22) being smooth, and the second surface (22) comprising a first opening (26) and a second opening (27), and the pearl (10) further having a passage (30) for an archwire (12), the passage (30) extending through the first opening (26) and the second opening (27) of the second surface (22), and longitudinally between the first and the second openings (26, 27) along a longitudinal direction, wherein the pearl (10) is obtained by additive manufacturing, wherein the pearl (10) comprises material and gaps in a honeycomb type structure in between the surface (16) and the passage (30) in such a way that the arrangement of matter improves the rigidity of the pearl.

13. The method of the preceding claim, wherein the additive manufacturing is made with a ceramic material.

14. The method of claim 2 wherein the additive manufacturing is made with a biocompatible material.

## Patentansprüche

1. Perle (10), die auf einem Zahn (14) für eine kieferorthopädische Behandlung zu platzieren ist, wobei die Perle (10) eine Oberfläche (16) aufweist, die eine erste Oberfläche (18) und eine zweite Oberfläche (22) umfasst, wobei die erste Oberfläche (18) dazu bestimmt ist, in Kontakt mit einem Zahn (14) zu sein, und die zweite Oberfläche (22) der ersten Oberfläche (18) gegenüberliegt, wobei die zweite Oberfläche (22) glatt ist, und wobei die zweite Oberfläche (22) eine erste Öffnung (26) und eine zweite Öffnung (27) umfasst, und die Perle (10) ferner einen Durchgang (30) für einen Bogendraht (12) aufweist, wobei sich der Durchgang (30) durch die erste Öffnung (26) und die zweite Öffnung (27) der zweiten Oberfläche (22) und in Längsrichtung zwischen der ersten und der zweiten Öffnung (26, 27) entlang einer Längsrichtung erstreckt, wobei die Perle (10) Material und Lücken in einer wabenartigen Struktur zwischen der Oberfläche (16) und dem Durchgang (30) in einer solchen Weise umfasst, dass die Anordnung von Material die Rigidität der Perle verbessert.

2. Perle (10) nach Anspruch 1, wobei die Perle (10) ferner eine dritte Oberfläche (23) umfasst, die dritte Oberfläche die zweite Oberfläche (22) in zwei Abschnitte (22A, 22B) trennt und die dritte Oberfläche (23) eine Rille (123) umfasst.

3. Perle (10) nach einem der Ansprüche 1 oder 2, wobei die Perle (10) beschichtet ist.

4. Perle (10) nach einem der vorhergehenden Ansprüche, wobei das Material des Durchgangs (30) Metall umfasst.

5. Perle (10) nach einem der vorhergehenden Ansprüche, wobei die Perle (10) zwei Durchgänge (30, 31) aufweist.

6. Perle (10) nach einem der vorhergehenden Ansprüche, wobei die Perle (10) ferner ein Gehäuse (34) umfasst, das zur Aufnahme eines freien Endes eines Bogendrahts (12) vorgesehen ist.

7. Perle (10) nach einem der vorhergehenden Ansprüche, wobei die erste Oberfläche (18) einen Perlenbereich (20) aufweist, der in Kontakt mit einem Zahnbereich (15) an einem Zahn (14) steht, wobei der Perlenbereich (20) und der Zahnbereich (15) komplementär sind.

8. Perle (10) nach einem der vorhergehenden Ansprüche, wobei die zweite Oberfläche (22) ferner einen Scheitelpunkt (24) umfasst, wobei der Scheitelpunkt (24) glatt ist.

9. Perle (10) nach dem vorhergehenden Anspruch, wobei die erste Oberfläche (18) eine maximale vertikale Abmessung (V18) von 4 mm und eine maximale horizontale Abmessung (H18) von 3 mm aufweist und wobei der Scheitelpunkt (24) sich in einem maximalen Abstand (D24) von der ersten Oberfläche (18) von 3 mm befindet.

10. Perle (10) nach einem der vorhergehenden Ansprüche, wobei die Perle (10) ein Volumen zwischen 3 mm³ und 11 mm³ aufweist, wobei das Volumen durch die Oberfläche (16) begrenzt wird.

11. Perle (10) nach einem der vorhergehenden Ansprüche, wobei die Perle (10) ein Gewicht zwischen 1 g und 10 g aufweist.

12. Verfahren zur Herstellung einer Perle (10), die für eine kieferorthopädische Behandlung auf einem Zahn (14) platziert wird, wobei die Perle (10) eine Oberfläche (16) aufweist, die aus einer ersten Oberfläche (18) und einer zweiten Oberfläche (22) besteht, wobei die erste Oberfläche (18) dazu bestimmt ist, mit einem Zahn (14) in Kontakt zu sein, und die zweite Oberfläche (22) der ersten Oberfläche (18) gegenüberliegt, wobei die zweite Oberfläche (22) glatt ist, und die zweite Oberfläche (22) eine erste Öffnung (26) und eine zweite Öffnung (27) umfasst, und die Perle (10) ferner einen Durchgang (30) für einen Bogendraht (12) aufweist, wobei sich der Durchgang (30) durch die erste Öffnung (26) und die zweite Öffnung (27) der zweiten Oberfläche (22) und in Längsrichtung zwischen der ersten und der zweiten Öffnung (26, 27) entlang einer Längsrichtung erstreckt, wobei die Perle (10) durch additive Fertigung erhalten wird, wobei die Perle (10) Material und Lücken in einer wabenartigen Struktur zwischen der Oberfläche (16) und dem Durchgang (30) in einer solchen Weise umfasst, dass die Anordnung von Material die Rigidität der Perle verbessert.

13. Verfahren nach dem vorhergehenden Anspruch, wobei die additive Fertigung mit einem keramischen Material gemacht wird.

14. Verfahren nach Anspruch 12, wobei die additive Herstellung mit einem biokompatiblen Material gemacht wird.

## Revendications

1. Perle (10) à placer sur une dent (14) pour un traitement orthodontique, la perle (10) ayant une surface (16), la surface (16) comprenant une première surface (18) et une deuxième surface (22), la première surface (18) étant destinée à être en contact avec une dent (14) et la deuxième surface (22) étant opposée à la première surface (18), dans laquelle la deuxième surface (22) est lisse, et dans laquelle la deuxième surface (22) comprend une première ouverture (26) et une seconde ouverture (27), et la perle (10) présente en outre un passage (30) pour un fil métallique pour arc (12), le passage (30) s'étendant à travers la première ouverture (26) et la seconde ouverture (27) de la deuxième surface (22), et longitudinalement entre les première et seconde ouvertures (26, 27) le long d'une direction longitudinale, dans laquelle la perle (10) comprend un matériau et des espaces dans une structure de type en nid d'abeille entre la surface (16) et le passage (30) de telle manière que l'agencement de matière améliore la rigidité de la perle.

2. Perle (10) selon la revendication 1, dans laquelle la perle (10) comprend en outre une troisième surface (23), la troisième surface sépare la deuxième surface (22) en deux parties (22A, 22B), et la troisième surface (23) comprend un sillon (123).

3. Perle (10) selon l'une quelconque des revendications 1 ou 2, dans laquelle la perle (10) est revêtue.

4. Perle (10) selon l'une quelconque des revendications précédentes, dans laquelle le matériau du passage (30) comprend un métal.

5. Perle (10) selon l'une quelconque des revendications précédentes, dans laquelle la perle (10) comprend deux passages (30, 31).

6. Perle (10) selon l'une quelconque des revendications précédentes, dans laquelle la perle (10) comprend en outre un logement (34) fourni pour recevoir une extrémité libre d'un fil métallique pour arc (12).

7. Perle (10) selon l'une quelconque des revendications précédentes, dans laquelle la première surface (18) présente une zone de perle (20) qui est en contact avec une zone de dent (15) sur une dent (14), la zone de perle (20) et la zone de dent (15) étant complémentaire.

8. Perle (10) selon l'une quelconque des revendications précédentes, la deuxième surface (22) comprend en outre un sommet (24), dans laquelle le sommet (24) est lisse.

9. Perle (10) selon la revendication précédente, dans laquelle la première surface (18) présente une dimension verticale maximale (V18) de 4 mm et une dimension horizontale maximale (H18) de 3 mm et dans laquelle le sommet (24) est à une distance maximale (D24) de la première surface (18) de 3 mm.

10. Perle (10) selon l'une quelconque des revendications précédentes, dans laquelle la perle (10) présente un volume compris entre 3 mm³ et 11 mm³, le volume étant délimité par la surface (16).

11. Perle (10) selon l'une quelconque des revendications précédentes, dans laquelle la perle (10) présente un poids compris entre 1 g et 10 g.

12. Procédé de fabrication d'une perle (10) à placer sur une dent (14) pour un traitement orthodontique, la perle (10) comprenant une surface (16), la surface (16) consistant en une première surface (18) et une deuxième surface (22), la première surface (18) étant destinée à être en contact avec une dent (14) et la deuxième surface (22) étant opposée à la première surface (18), la deuxième surface (22) étant lisse, et la deuxième surface (22) comprenant une première ouverture (26) et une seconde ouverture (27), et la perle (10) présentant en outre un passage (30) pour un fil métallique pour arc (12), le passage (30) s'étendant à travers la première ouverture (26) et la seconde ouverture (27) de la deuxième surface (22), et longitudinalement entre les première et seconde ouvertures (26, 27) le long d'une direction longitudinale, dans lequel la perle (10) est obtenue par fabrication additive, dans lequel la perle (10) comprend un matériau et des espaces dans une structure de type en nid d'abeille entre la surface (16) et le passage (30) de telle manière que l'agencement de matière améliore la rigidité de la perle.

13. Procédé selon la revendication précédente, dans lequel la fabrication additive est effectuée avec un matériau céramique.

14. Procédé selon la revendication 12, dans lequel la fabrication additive est effectuée avec un matériau biocompatible.
